# DEMANDE DE BREVET EUROPEEN

(11) **EP 2 306 688 A1**
(43) Date de publication de la demande: **06.04.2011**
(21) Numéro de dépôt: 10181140.4
(22) Date de dépôt: 28.09.2010
(51) Int. Cl.: H04L 29/08, G06F 21/00, H04L 29/06

(54) **Dispositif et procédé de contrôle de traces d'accès d'usagers d'équipements de communication à des contenus**

(30) Priorité: 30.09.2009 FR 0956811
(71) Demandeur: Alcatel Lucent, 75007 Paris (FR)
(72) Inventeur: Senot, Christophe, 90620, NOZAY (FR); Kostadinov, Dimitre Davidov, 91620, NOZAY (FR); Toms, Yann, 91620, NOZAY (FR); Bernier, Cédric, 91620, NOZAY (FR)
(74) Mandataire: Nicolle, Olivier

(57) **Abrégé**

Un procédé est dédié au contrôle de traces d'accès à des contenus par au moins un usager disposant d'un profil associé à une politique personnelle d'utilisation de profil et d'un équipement de communication (E1) pouvant se connecter à un réseau de communication (R) dont l'opérateur dispose d'une politique générale d'utilisation de profil et de moyens de gestion (MG1) agencés pour générer et mettre à jour les profils d'usagers à partir de leurs traces d'accès à des contenus. Ce procédé comprend les étapes suivantes lorsqu'un usager veut accéder à un contenu avec son équipement de communication (E1) via le réseau (R) : i) analyse de données décrivant le contenu afin de déterminer si son accès par l'usager doit être considéré comme une trace compte tenu de sa politique personnelle d'utilisation du profil et de la politique générale d'utilisation de profil, ii) génération d'un certificat (CR) représentatif du résultat de la détermination effectuée à l'étape i), et iii) adjonction du certificat (CR) au contenu en vue de son affichage avec le contenu.

## Description

L'invention concerne les réseaux de communication, filaires et non filaires, et plus précisément le contrôle des traces d'accès à des contenus par des usagers d'équipements de communication capables de se connecter à de tels réseaux de communication.

On entend ici par « contenu » un ensemble de données, d'un ou plusieurs types, qui définit un programme de télévision ou de vidéo ou audio (radiophonique ou musical) ou de jeux ou multimédia, ou un guide de programmes (par exemple de type EPG), ou une page web (ou Internet), ou encore un fichier informatique (ou « data »).

Comme le sait l'homme de l'art, certains opérateurs de réseau(x) de communication disposent d'équipements qui sont capables de détecter les traces que laissent les usagers lorsqu'ils accèdent à des contenus (par exemple par téléchargement ou au niveau d'un site Internet). Ces traces sont utilisées par les opérateurs pour définir (généralement de façon automatisée) des profils des usagers qui leurs servent notamment à mieux cibler les services, applications ou contenus qu'ils peuvent automatiquement leur proposer.

On entend ici par « profil d'usager » un ensemble de données numériques définissant l'identité d'un usager, comme par exemple ses données démographiques (âge, sexe, catégorie socioprofessionnelle) et des intérêts (ou des préférences ou des habitudes ou encore des passe temps) pour un ou plusieurs sujets, comme par exemple des programmes de télévision, des types de vidéo (ou de film), des programmes de radio, des informations, de la musique, de la publicité, des divertissements, des services utilisés, ou des achats électroniques.

On comprendra que ces traces permettent également aux tiers visités (comme par exemple des sites Internet) d'obtenir et d'utiliser des informations personnelles sur les usagers, à leur insu et fréquemment contre leur gré. Il en résulte que de nombreux usagers sont de plus en plus méfiants vis-à-vis des opérateurs et de certains sites Internet et préfèrent utiliser des moyens permettant d'empêcher la collecte d'informations (par exemple en interdisant l'utilisation de cookies) ou simplement interdire l'utilisation de leurs profils, comme les y autorisent de nombreuses lois nationales, ce qui pénalise à la fois ces usagers et leurs opérateurs.

Certaines solutions ont été proposées pour informer les usagers des intentions de certains sites Internet d'utiliser les informations personnelles collectées sur eux grâce à leurs traces d'accès.

C'est notamment le cas de l'application proposée par le W3C sous l'acronyme P3P (« Platform for Privacy Preferences »). Cette solution consiste à permettre, d'une part, à des sites Internet de générer des politiques privées définissant leurs intentions d'utilisation de certaines informations personnelles des usagers qui les visitent, et d'autre part, à des usagers de générer des politiques personnelles définissant les informations personnelles qu'ils autorisent à être utilisées, notamment par des tiers (tels que des sites Internet visités). Lorsqu'un tel usager visite un tel site Internet, l'application P3P compare les informations personnelles dont l'accès a été autorisé par cet usager aux informations personnelles que recherche ce site Internet. En cas de discordance, l'application P3P alerte l'usager et lui demande s'il est prêt à autoriser l'accès à certaines autres de ses informations personnelles. L'inconvénient de cette solution réside dans son caractère figé qui interdit aux usagers d'adapter au moins temporairement leurs politiques personnelles en temps réel. En outre, les politiques définies par l'application P3P s'appliquent à l'ensemble d'un site web (ou Internet) et non de manière indépendante pour chacune de ses pages. De plus, le contenu de certaines pages web peut être mis à jour fréquemment ou dynamiquement en fonction de l'utilisateur qui y accède.

L'invention a donc pour but d'améliorer la situation, notamment en traitant l'information de manière plus fine et dynamique.

Elle propose à cet effet un procédé dédié au contrôle de traces d'accès à des contenus par au moins un usager qui dispose d'un profil associé à une politique personnelle d'utilisation de profil et d'un équipement de communication pouvant se connecter à un réseau de communication dont l'opérateur dispose d'une politique générale d'utilisation de profil et de moyens de gestion agencés pour générer et mettre à jour les profils d'usagers à partir de leurs traces d'accès à des contenus.

Ce procédé de contrôle se caractérise par le fait qu'il comprend les étapes suivantes, lorsqu'un usager veut accéder à un contenu avec son équipement de communication via le réseau :
i) analyse de données décrivant ce contenu afin de déterminer si son accès par l'usager doit être considéré comme une trace compte tenu de sa politique personnelle d'utilisation de profil et de la politique générale d'utilisation de profil,
ii) génération d'un certificat représentatif du résultat de la détermination effectuée à l'étape i), et
iii) adjonction du certificat généré au contenu en vue de son affichage avec ce contenu.

Le procédé selon l'invention peut comporter d'autres caractéristiques qui peuvent être prises séparément ou en combinaison, et notamment :
- à l'étape ii) on peut générer un certificat représentatif d'un résultat qui signale à l'usager que l'accès au contenu soit ne sera pas utilisé en tant que trace pour la mise à jour de son profil, lorsque au moins la politique personnelle d'utilisation du profil de l'usager l'interdit, soit sera utilisé en tant que trace pour la mise à jour de son profil, lorsque la politique personnelle d'utilisation du profil de l'usager et la politique générale d'utilisation de profil l'autorisent conjointement, soit encore sera utilisé sous réserve en tant que trace pour la mise à jour de son profil, lorsque la politique personnelle d'utilisation du profil de l'usager l'autorise mais que la politique générale d'utilisation de profil l'interdit ;
- à l'étape ii) on peut générer un certificat comprenant une zone de saisie interactive propre à permettre à l'usager de modifier le résultat de la détermination effectuée à l'étape i) ;
   ➢ on peut adapter dynamiquement la politique personnelle de l'usager en fonction de saisies effectuées par cet usager dans la zone de saisie interactive pour modifier des résultats de déterminations effectuées lors de l'étape i) et d'étapes i) antérieures ;
- à l'étape iii) on peut adjoindre le certificat au contenu en vue de son affichage dans ce contenu ;
   ➢ à l'étape iii) on peut adjoindre le certificat par insertion continue dans un endroit choisi dudit contenu ou bien par superposition continue dans un endroit choisi dudit contenu ;
- en variante, à l'étape iii) on peut adjoindre le certificat au contenu en vue de son affichage dans un endroit choisi d'une zone de contrôle affichée d'une application qui assure l'affichage du contenu sur l'écran de l'équipement de communication de l'usager ;
- à l'étape i) on peut effectuer une analyse sémantique de données du descriptif de contenu qui est associé au contenu afin d'extraire des expressions signifiantes, puis on peut déterminer si ces expressions signifiantes extraites sont compatibles avec la politique personnelle d'utilisation du profil de l'usager et la politique générale d'utilisation de profil ;
- on peut prévoir une étape iv) dans laquelle on détermine pour chaque trace un statut final définissant son exploitabilité à des fins de profilage.

L'invention propose également un dispositif dédié au contrôle de traces d'accès à des contenus par au moins un usager disposant d'un profil, associé à une politique personnelle d'utilisation de profil, et d'un équipement de communication pouvant se connecter à un réseau de communication dont l'opérateur dispose d'une politique générale d'utilisation de profil et de moyens de gestion agencés (ou conçus) pour générer et mettre à jour les profils d'usagers à partir de leurs traces d'accès à des contenus.

Ce dispositif de gestion se caractérise par le fait qu'il comprend :
- des moyens d'analyse agencés (ou conçus), lorsqu'un usager veut accéder à un contenu avec son équipement de communication via le réseau, pour analyser des données décrivant ce contenu afin de déterminer si son accès par l'usager doit être considéré comme une trace compte tenu de sa politique personnelle d'utilisation de profil et de la politique générale d'utilisation de profil, et
- des moyens de génération agencés (ou conçus) pour générer un certificat qui est représentatif du résultat d'une détermination effectuée pour le contenu par les moyens d'analyse, et qui est destiné à être adjoint au contenu en vue de son affichage avec ce contenu.

Le dispositif selon l'invention peut comporter d'autres caractéristiques qui peuvent être prises séparément ou en combinaison, et notamment :
- ses moyens de génération peuvent être agencés pour générer un certificat qui est représentatif d'un résultat signalant à l'usager que l'accès au contenu soit ne sera pas utilisé en tant que trace pour la mise à jour de son profil, lorsque au moins la politique personnelle d'utilisation du profil de l'usager l'interdit, soit sera utilisé en tant que trace pour la mise à jour de son profil, lorsque la politique personnelle d'utilisation du profil de l'usager et la politique générale d'utilisation de profil l'autorisent conjointement, soit encore sera utilisé sous réserve en tant que trace pour la mise à jour de son profil, lorsque la politique personnelle d'utilisation du profil de l'usager l'autorise mais que la politique générale d'utilisation de profil l'interdit ;
- ses moyens de génération peuvent être agencés pour générer un certificat comprenant une zone de saisie interactive propre à permettre à l'usager de modifier le résultat d'une détermination effectuée par ses moyens d'analyse ; ➢ il peut comprendre des moyens d'adaptation agencés pour adapter dynamiquement une politique personnelle d'usager en fonction de saisies effectuées par cet usager dans la zone de saisie interactive pour modifier des résultats de déterminations effectuées par ses moyens d'analyse ;
- ses moyens d'analyse peuvent être agencés pour effectuer une analyse sémantique de données du descriptif de contenu qui est associé au contenu afin d'extraire des expressions signifiantes, puis pour déterminer si ces expressions signifiantes extraites sont compatibles avec la politique personnelle d'utilisation du profil de l'usager et la politique générale d'utilisation de profil.

L'invention propose également un équipement de réseau équipé d'un dispositif de contrôle du type de celui présenté ci-avant.

L'invention propose également un équipement de communication équipé d'un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique et fonctionnelle un réseau de communication auquel sont connectés des services de contenus, des moyens de gestion de profils d'usagers, des équipements de communication d'usagers et un serveur équipé d'un exemple de réalisation d'un dispositif de contrôle selon l'invention,
- la figure 2 illustre de façon très schématique un premier exemple de certificat de résultat signalant l'interdiction de considérer le contenu associé en tant que trace,
- la figure 3 illustre de façon très schématique un deuxième exemple de certificat de résultat signalant l'autorisation de considérer le contenu associé en tant que trace, et
- la figure 4 illustre de façon très schématique un troisième exemple de certificat de résultat signalant l'autorisation sous réserve de considérer le contenu associé en tant que trace.

Les dessins annexés pourront non seulement servir à compléter l'invention, mais aussi contribuer à sa définition, le cas échéant.

L'invention a pour objet d'offrir un procédé, et un dispositif (D) associé, permettant un contrôle des traces d'accès à des contenus par au moins un usager d'un équipement de communication (Ei) propre à se connecter à un réseau de communication (R).

Dans ce qui suit, on considère à titre d'exemple non limitatif que les usagers sont munis d'équipements de communication (Ei) de type filaire, comme par exemple des ordinateurs, pouvant se connecter à un réseau de communication (R) de type filaire (par exemple ADSL). Mais, l'invention n'est limitée ni à ce type de réseau de communication, ni à ce type d'équipement de communication. Elle concerne en effet tout type de réseau de communication filaire ou non filaire, et donc tout type d'équipement de communication pouvant se connecter à un réseau de communication filaire ou non filaire. Par conséquent, le réseau de communication (R) pourra également être, par exemple, un réseau mobile (ou cellulaire), et les équipements de communication (Ei) pourront également être, par exemple, des ordinateurs portables, des téléphones fixes ou mobiles, des assistants personnels numériques communicants (ou « PDAs »), ou des consoles de jeux communicantes.

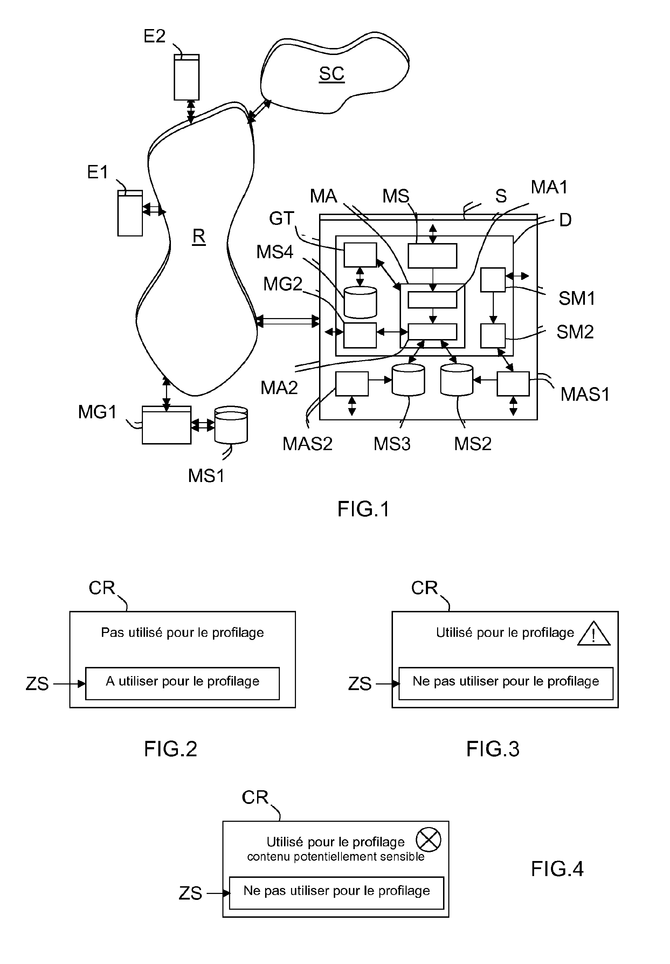

On a schématiquement représenté sur la figure 1 un exemple de réseau (de communication) R, éventuellement connecté au réseau de réseaux (ou Internet), et auquel sont connectés, d'une première part, des équipements (de communication) Ei, appartenant à des usagers qui sont clients (directement ou indirectement (nomades)) de l'opérateur dudit réseau R, et d'autre part, des équipements de réseau et/ou des applications (regroupés par simplicité dans un patatoïde référencé SC) permettant aux équipements de communication Ei d'accéder à des contenus et de télécharger certains au moins d'entre eux.

Ces équipements de réseau SC peuvent par exemple être des serveurs de contenus (faisant éventuellement partie d'un service, par exemple de vidéo à la demande (ou VoD)) ou des sites Internet.

On notera que certains au moins de ces équipements de réseau et/ou applications SC peuvent faire partie du réseau R, et notamment de son coeur de réseau. Dans ce cas, ils (elles) appartiennent à l'opérateur du réseau R. Mais, cela n'est pas obligatoire.

Dans l'exemple non limitatif illustré, deux équipements de communication E1-E2 (i = 1 ou 2) sont connectés au réseau R. Mais, l'invention s'applique dès lors qu'au moins un équipement de communication Ei est connecté au réseau R.

Il est important de noter que l'invention nécessite que le réseau R dispose de moyens de gestion MG1 agencés de manière à générer et mettre à jour des profils d'usagers à partir de leurs traces d'accès à des contenus. Dans l'exemple non limitatif illustré, les moyens de gestion MG1 sont connectés au réseau R ainsi qu'à des premiers moyens de stockage MS1 dans lesquels sont stockées les informations constituant les profils des usagers. Mais, les moyens de gestion MG1 et les premiers moyens de stockage MS1 pourraient faire partie du réseau R.

Les premiers moyens de stockage MS1 peuvent se présenter sous n'importe quelle forme connue de l'homme de l'art, comme par exemple une mémoire (éventuellement purement logicielle) ou une base de données.

Comme indiqué dans la partie introductive, on entend ici par « profil d'usager » un ensemble de données numériques définissant l'identité d'un usager comme par exemple ses données démographiques (âge, sexe, catégorie socioprofessionnelle) et des intérêts (ou des préférences ou des habitudes ou encore des passe temps) pour un ou plusieurs sujets, comme par exemple des programmes de télévision, des types de vidéo (ou de film), des programmes de radio, des informations, de la musique, de la publicité, des divertissements, des services utilisés, ou des achats électroniques.

Il est également important de noter que certains au moins des usagers peuvent disposer d'une politique personnelle d'utilisation de leur profil. Ces politiques personnelles d'utilisation de profil peuvent par exemple être générées par les usagers au moyen d'un premier module d'assistance MAS1 qui, comme illustré non limitativement, peut faire partie d'un équipement de réseau S, mais qui, dans une variante distribuée, pourrait faire partie de certains au moins des équipements de communication Ei des usagers. On notera que le premier module d'assistance MAS1 pourrait également faire partie d'un dispositif de contrôle D selon l'invention sur lequel on reviendra plus loin.

Le (ou chaque) premier module d'assistance MAS1 peut par exemple se présenter sous la forme d'une interface graphique. Par ailleurs, le premier module d'assistance MAS1 peut, comme illustré non limitativement, être couplé à des deuxièmes moyens de stockage MS2 chargés de stocker les politiques personnelles d'utilisation des profils d'usagers. Comme illustré non limitativement, ces deuxièmes moyens de stockage MS2 peuvent faire partie du serveur (ou équipement de réseau) S, mais en variante ils pourraient par exemple faire partie du dispositif de contrôle D.

Les deuxièmes moyens de stockage MS2 peuvent se présenter sous n'importe quelle forme connue de l'homme de l'art, comme par exemple une mémoire (éventuellement purement logicielle) ou une base de données.

L'équipement de réseau S est connecté au (ou accessible via le) réseau de communication R, et est destiné à travailler de façon centralisée pour plusieurs usagers. Cet équipement de réseau S peut par exemple être un serveur. On notera que ce serveur S pourrait faire partie du réseau R.

Il est également important de noter que l'invention nécessite que l'opérateur dispose d'au moins une politique générale d'utilisation des profils d'usagers. Chaque politique générale d'utilisation de profil peut par exemple être générée par une personne travaillant pour l'opérateur du réseau R au moyen d'un second module d'assistance MAS2 qui, comme illustré non limitativement, peut faire partie du serveur (ou équipement de réseau) S, mais qui, dans une variante, pourrait faire partie du dispositif D.

Ce second module d'assistance MAS2 peut par exemple se présenter sous la forme d'une interface graphique. Par ailleurs, le second module d'assistance MAS2 peut, comme illustré non limitativement, être couplé à des troisièmes moyens de stockage MS3 chargés de stocker la ou les politiques générales d'utilisation de profil. Comme illustré non limitativement, ces troisièmes moyens de stockage MS3 peuvent faire partie du serveur (ou équipement de réseau) S, mais en variante ils pourraient par exemple faire partie du dispositif D.

L'invention propose notamment de mettre en oeuvre un procédé de contrôle de traces d'accès à des contenus. Ce procédé peut par exemple être mis en oeuvre au moyen d'un dispositif (de contrôle) D, du type de celui qui est illustré non limitativement sur la figure 1.

On notera que dans l'exemple non limitatif illustré sur la figure 1 le dispositif (de contrôle) D fait partie de l'équipement de réseau S qui est connecté au (ou accessible via le) réseau de communication R, et qui est destiné à travailler de façon centralisée pour plusieurs usagers. Cet équipement de réseau S peut par exemple être un serveur. Mais, un dispositif D, selon l'invention, peut constituer un équipement de réseau pouvant se connecter à un réseau de communication ou bien un équipement ou élément connecté (ou accessible) à un équipement de réseau. Un dispositif D, selon l'invention, peut également être associé à un unique équipement de communication Ei afin de ne travailler que pour ce dernier. Dans ce cas, il peut faire partie de l'équipement de communication Ei ou bien être connecté à ce dernier (Ei).

Le procédé selon l'invention comprend trois étapes principales.

Une première étape principale (i) est mise en oeuvre chaque fois qu'un usager veut accéder à un contenu (pour le télécharger ou simplement le voir (consommation ou consultation)) avec son équipement de communication Ei, via le réseau R. Cette première étape principale (i) consiste à analyser des données d'un descriptif du contenu concerné afin de déterminer si son accès par l'usager concerné doit être considéré comme une trace compte tenu de sa politique personnelle d'utilisation de profil et de la politique générale d'utilisation de profil de l'opérateur.

Cette première étape principale (i) peut par exemple être mise en oeuvre par des moyens d'analyse MA qui font partie du dispositif D.

On notera que le dispositif D peut être informé de l'accès d'un usager à un contenu soit par l'équipement de communication Ei de cet usager (au moyen d'une demande de certificat), soit de façon automatisée par un module de surveillance MS qui est chargé de surveiller au sein du réseau R toutes les demandes d'accès de certains usagers (identifiés) à des contenus et de déterminer en temps réel les descriptifs (ou méta données) des contenus auxquels les usagers veulent accéder. Comme illustré non limitativement, ce module de surveillance MS peut faire partie du dispositif D, mais en variante il pourrait par exemple faire partie du serveur (ou équipement de réseau) S.

On entend ici par « descriptif » une ou plusieurs informations signifiantes permettant de décrire ou classer un contenu. A titre d'exemples non limitatifs une telle information peut être un type ou une catégorie, un nom d'acteur ou de réalisateur ou de compositeur ou d'ensemble (ou groupe) musical ou de chanteur ou de directeur de la photographie, ou un résumé.

Les moyens d'analyse MA peuvent par exemple comprendre un premier sous-module MA1 chargé d'effectuer des analyses sémantiques de certaines au moins des données d'information de chaque descriptif de contenu afin d'en extraire des expressions signifiantes. Tout type d'analyse sémantique connu de l'homme de l'art peut être utilisé.

Il est rappelé que chaque règle est définie par un ensemble de concepts et/ou de mots clés et d'une politique représentant une autorisation ou une interdiction d'utilisation. Le premier sous-module MA1 est donc chargé d'analyser si les mots clés/concepts définissant le descriptif d'un contenu sont présents dans des règles. Si tel est le cas (et donc si une règle est concernée), il retourne la politique qui est associée à cette règle. Si aucune règle n'est associée il retourne une (ou la) politique par défaut.

Les moyens d'analyse MA peuvent par exemple comprendre un second sous-module MA2 chargé, une fois que le premier sous-module MA1 a extrait des expressions signifiantes relatives à un contenu, d'accéder aux deuxièmes MS2 et troisièmes MS3 moyens de stockage pour obtenir une copie de la politique personnelle d'utilisation de profil de l'usager considéré et une copie de la (ou d'une) politique générale d'utilisation de profil de l'opérateur du réseau R. Puis, le second sous-module MA2 détermine si les expressions signifiantes extraites sont compatibles avec cette politique personnelle d'utilisation de profil et cette politique générale d'utilisation de profil obtenues. Il délivre alors un résultat d'analyse.

On entend ici par « compatibilité » le fait de satisfaire aux règles qui constituent une politique personnelle ou générale.

Chaque règle est définie par un ensemble de concepts ou mots clés et d'une politique représentant l'autorisation ou l'interdiction d'utilisation. Le module comprenant les moyens d'analyse (MA) extrait en temps réel des contenus consultés par l'utilisateur les mots clés ou concepts le décrivant (d'un point de vu sémantique) et analyse si ces mots clés/concepts sont présents dans des règles. Si une règle est concernée, le system retourne la politique associée à cette règle. Si aucune règle n'est associée le système retourne la politique par défaut.

Une deuxième étape principale (ii) du procédé selon l'invention consiste à générer un certificat CR qui est représentatif du résultat de la détermination effectuée lors de la première étape principale (i).

Cette deuxième étape principale (ii) peut par exemple être mise en oeuvre par des moyens de génération MG2 qui font partie du dispositif D et qui sont couplés à ses moyens d'analyse MA.

Tout type de certificat CR peut être envisagé dès lors qu'il peut être affiché en même temps que le contenu concerné sur l'écran de l'équipement de communication Ei de l'usager concerné. De préférence, les moyens de génération MG2 sont agencés pour générer chaque certificat CR selon un format qui est adapté au contenu auquel il doit être adjoint. Ainsi, il peut par exemple s'agir d'une image ou d'un texte ou d'une icône.

On a schématiquement représenté sur les figures 2 à 4 trois exemples de certificat de résultat CR correspondant à trois situations différentes.

Le certificat de résultat CR illustré sur la figure 2 signale à l'usager que l'accès au contenu associé ne sera pas utilisé en tant que trace pour la mise à jour de son profil et donc qu'il ne servira pas à l'obtention d'informations personnelles à son sujet. Il correspond à une situation dans laquelle soit la politique personnelle d'utilisation du profil de l'usager et la politique générale d'utilisation de profil de l'opérateur du réseau R interdisent toutes les deux l'utilisation de la trace d'accès au contenu concerné, soit la politique personnelle d'utilisation du profil de l'usager interdit l'utilisation de la trace d'accès au contenu concerné tandis que la politique générale d'utilisation de profil de l'opérateur du réseau R autorise l'utilisation de la trace d'accès au contenu concerné.

Le certificat de résultat CR illustré sur la figure 3 signale à l'usager que l'accès au contenu associé sera utilisé en tant que trace pour la mise à jour de son profil et donc qu'il pourra servir à l'obtention d'informations personnelles à son sujet. Il correspond à une situation dans laquelle la politique personnelle d'utilisation du profil de l'usager et la politique générale d'utilisation de profil de l'opérateur du réseau R autorisent toutes les deux l'utilisation de la trace d'accès au contenu concerné.

Le certificat de résultat CR illustré sur la figure 4 signale à l'usager que l'accès au contenu associé sera utilisé en tant que trace pour la mise à jour de son profil, contrairement à l'avis de l'opérateur, et donc qu'il pourra servir à l'obtention d'informations personnelles à son sujet. Il s'agit donc d'un accès autorisé sous réserve (ou avec un avertissement). Il correspond à une situation dans laquelle la politique personnelle d'utilisation du profil de l'usager autorise l'utilisation de la trace d'accès au contenu concerné tandis que la politique générale d'utilisation de profil de l'opérateur du réseau R interdit l'utilisation de la trace d'accès au contenu concerné. Dans cet exemple, le certificat CR comprend un message signalant que le contenu est potentiellement sensible pour l'usager.

Le certificat de la figure 4 est utilisé pour informer l'usager que l'on a détecté que le contenu auquel il voulait accéder pouvait contenir des données sensibles pour lui (du fait que ces dernières n'ont pas fait l'objet d'une règle spécifique dans son profil). La détection de données sensibles pour un usager peut être réalisée en comparant les différents profils de tous les usagers concernés par le service considéré (règles définies par les usagers). Par exemple, les règles revenant le plus souvent dans les profils des usagers peuvent être utilisées pour détecter les données sensibles. On notera que certaines règles et certaines interactions d'usagers peuvent être éventuellement utilisées de façon collaborative pour en déduire de nouvelles règles pour des (chaque) usager(s).

On notera également, comme illustré non limitativement sur les figures 2 à 4, qu'il est avantageux que le certificat de résultat CR, qui est généré lors de la deuxième étape principale (ii) par les moyens de génération MG2, comprenne une zone de saisie interactive ZS destinée à permettre à l'usager concerné de modifier en temps réel le résultat de la détermination qui a été effectuée lors de la première étape principale (i) par les moyens d'analyse MA.

Par exemple, et comme illustré non limitativement, la zone de saisie interactive ZS peut comporter un message proposant à l'usager d'agir à l'opposé du résultat obtenu. Ainsi, dans le cas de la figure 2, le certificat CR signale que l'accès au contenu associé ne sera pas considéré comme une trace et la zone de saisie interactive ZS comporte un message proposant à l'usager que l'accès au contenu associé soit considéré comme une trace. Dans le cas de la figure 3, le certificat CR signale que l'accès au contenu associé sera considéré comme une trace et la zone de saisie interactive ZS comporte un message proposant à l'usager que l'accès au contenu associé ne soit pas considéré comme une trace. Dans le cas de la figure 4, le certificat CR signale que l'accès au contenu associé sera considéré comme une trace avec un avertissement et la zone de saisie interactive ZS comporte un message proposant à l'usager que l'accès au contenu associé ne soit pas considéré comme une trace.

On notera qu'une zone de saisie interactive peut éventuellement proposer plusieurs options à l'usager.

De préférence, tant que le dispositif D n'a pas produit de résultat d'analyse (et donc de certificat CR) pour un contenu, la trace d'accès à ce contenu ne sera pas prise en compte pour mettre à jour le profil d'un usager. Mais, qu'un résultat soit produit ou non n'empêche pas l'affichage du contenu sur l'écran d'un équipement de communication Ei.

Cet affichage conjoint résulte de l'opération effectuée lors de la troisième étape principale (iii) du procédé selon l'invention.

Cette troisième étape principale (iii) consiste en effet à adjoindre au contenu considéré le certificat CR, qui a été généré pour lui lors de la deuxième étape principale (ii), en vue de son affichage avec ce contenu.

Différents types d'adjonction peuvent être envisagés. Ainsi, on peut adjoindre le certificat CR au contenu associé afin qu'il soit affiché dans ce contenu, par exemple par insertion continue dans un endroit choisi du contenu ou bien par superposition continue dans un endroit choisi du contenu. Dans une variante, on peut adjoindre le certificat CR au contenu afin qu'il soit affiché dans un endroit choisi d'une zone de contrôle affichée de l'application qui est chargée d'assurer l'affichage du contenu sur l'écran de l'équipement de communication Ei de l'usager. Cette zone de contrôle est par exemple celle qui comporte des icônes et/ou des menus de sélection.

Le type d'adjonction peut dépendre de l'application d'affichage de contenu ou du service de fourniture de contenu ou du type du contenu ou encore d'un choix préalable.

A titre d'exemple non limitatif, dans le cas d'un contenu de type programme de télévision, le certificat CR associé peut permettre à l'usager, si il est interactif, d'effectuer une ou plusieurs saisies avec la télécommande de l'équipement de communication Ei qui sert à afficher le programme.

Par ailleurs, le fichier qui contient le certificat CR peut comporter des données qui définissent le type d'adjonction. Ce fichier est transmis par le serveur S à l'équipement de réseau SC qui offre l'accès au contenu requis par l'usager considéré en vue de l'adjonction du certificat CR qu'il contient au contenu.

On notera que rien n'oblige le fournisseur d'accès à un contenu à procéder à l'adjonction du certificat CR associé. Si le certificat CR est adjoint à un contenu, cela indique à l'usager que le fournisseur d'accès agit en toute transparence, permettant ainsi de renforcer la confiance de l'usager.

Une fois l'adjonction effectuée, le certificat CR est affiché avec le contenu associé sur l'écran de l'usager concerné. Si l'usager sélectionne la zone de saisie interactive ZS, par exemple en cliquant dessus avec une souris (ou analogue) de son équipement de communication Ei, alors l'action proposée par cette zone de saisie interactive ZS est effectuée à la place de celle proposée par le résultat. Par défaut, si l'usager ne sélectionne pas la zone de saisie interactive ZS l'action proposée par le résultat est effectuée.

On comprendra que grâce au certificat affiché CR l'usager peut décider en direct si il veut ou non que l'on puisse utiliser la trace d'accès au contenu qui vient d'être affiché sur l'écran de son équipement de communication Ei.

Comme illustré non limitativement sur la figure 1, le dispositif D peut comporter un module de gestion de traces GT chargé de stocker de façon temporaire dans des quatrièmes moyens de stockage MS4 (qui peuvent faire, également et de préférence, partie du dispositif D), des informations relatives à chaque demande de certificat faite par un équipement de communication Ei d'un usager souhaitant accéder à un contenu ou bien à chaque demande d'accès détectée par le module de surveillance MS. Par exemple (et non limitativement), pour chaque demande (de certificat ou d'accès) on peut stocker son heure, un identifiant de l'usager concerné, le certificat CR résultant de l'analyse et la sémantique qui est associée au contenu consommé par l'usager. Grâce à ces informations et/ou en fonction de l'interaction de l'usager avec le certificat CR qui lui est proposé, le module de gestion de traces GT peut par exemple attribuer à la trace d'accès à un contenu un statut final définissant son exploitabilité à des fins de profilage. Les moyens de gestion MG1 qui sont en charge du traitement des traces des usagers (par exemple au sein d'une plateforme de contenus ou d'un équipement de communication Ei d'un usager) peut alors consulter ce statut final afin d'autoriser ou non l'envoi de la trace d'accès à un système de profilage chargé de mettre à jour les profils des usagers.

On notera que lorsqu'un usager sélectionne la zone de saisie interactive ZS, c'est qu'il n'est pas d'accord, au moins temporairement, avec sa politique personnelle en vigueur. Par conséquent, il est possible d'envisager un raffinement consistant à adapter la politique personnelle de cet usager en fonction des saisies qu'il a effectuées dans la zone de saisie interactive pour modifier des résultats de déterminations effectuées lors de la dernière première étape principale (i) et de premières étapes principales (i) antérieures. Il est en effet préférable, pour une question statistique, d'attendre qu'un usager ait décidé plusieurs fois de modifier par saisie des résultats de déterminations avant d'envisager de modifier sa politique personnelle en fonction desdites modifications successives.

Comme illustré non limitativement, le dispositif D peut par exemple comprendre, d'une part, un premier sous-module SM1 chargé de collecter les messages générés à son attention par les équipements de communication Ei lorsque leurs usagers effectuent des saisies dans une zone de saisie interactive ZS, et d'autre part, un second sous-module SM2, couplé au premier SM1 et au premier module d'assistance MAS1, et agencé de manière à adapter (ou modifier) les politiques personnelles des usagers en fonction des modifications successives qu'ils ont requises par saisie.

On notera que le premier sous-module SM1 est également agencé de manière à adresser aux moyens de gestion MG1 du réseau R chaque message de saisie d'usager collecté afin qu'ils les prennent en compte lors de mises à jour de profils d'usagers.

Le dispositif de contrôle D selon l'invention, et notamment ses moyens d'analyse MA et ses moyens de génération MG2, peuvent être réalisés sous la forme de circuits électroniques, de modules logiciels (ou informatiques), ou d'une combinaison de circuits électroniques et de modules logiciels.

L'invention ne se limite pas aux modes de réalisation de dispositif de contrôle, d'équipement de réseau, d'équipement de communication et de procédé de contrôle décrits ci-avant, seulement à titre d'exemple, mais elle englobe toutes les variantes que pourra envisager l'homme de l'art dans le cadre des revendications ci-après.

## Revendications

1. Procédé de contrôle de traces d'accès à des contenus par au moins un usager disposant d'un profil associé à une politique personnelle d'utilisation de profil et d'un équipement de communication (Ei) pouvant se connecter à un réseau de communication (R) dont l'opérateur dispose d'une politique générale d'utilisation de profil et de moyens de gestion (MG1) agencés pour générer et mettre à jour lesdits profils d'usagers à partir de leurs traces d'accès à des contenus, **caractérisé en ce qu'**il comprend les étapes suivantes lorsqu'un usager veut accéder à un contenu avec son équipement de communication (Ei) via ledit réseau (R) : i) analyse de données décrivant ledit contenu de manière à déterminer si son accès par ledit usager doit être considéré comme une trace compte tenu de sa politique personnelle d'utilisation dudit profil et de ladite politique générale d'utilisation de profil, ii) génération d'un certificat (CR) représentatif du résultat de ladite détermination effectuée à l'étape i), et iii) adjonction dudit certificat (CR) audit contenu en vue de son affichage avec ledit contenu.

2. Procédé selon la revendication 1, **caractérisé en ce qu'**à l'étape ii) on génère un certificat (CR) représentatif d'un résultat signalant à l'usager que l'accès audit contenu soit ne sera pas utilisé en tant que trace pour la mise à jour de son profil, lorsque au moins la politique personnelle d'utilisation du profil de l'usager l'interdit, soit sera utilisé en tant que trace pour la mise à jour de son profil, lorsque la politique personnelle d'utilisation du profil de l'usager et la politique générale d'utilisation de profil l'autorisent conjointement, soit encore sera utilisé sous réserve en tant que trace pour la mise à jour de son profil, lorsque la politique personnelle d'utilisation du profil dudit usager l'autorise mais que ladite politique générale d'utilisation de profil l'interdit.

3. Procédé selon l'une des revendications 1 et 2, **caractérisé en ce qu'**à l'étape ii) on génère un certificat (CR) comprenant une zone de saisie interactive (ZS) propre à permettre audit usager de modifier le résultat de ladite détermination effectuée à l'étape i).

4. Procédé selon la revendication 3, **caractérisé en ce que** l'on adapte dynamiquement la politique personnelle dudit usager en fonction de saisies effectuées par cet usager dans ladite zone de saisie interactive (ZS) pour modifier des résultats de déterminations effectuées lors de ladite étape i) et d'étapes i) antérieures.

5. Procédé selon l'une des revendications 1 à 4, **caractérisé en ce qu'**à l'étape iii) on adjoint ledit certificat (CR) audit contenu en vue de son affichage dans ledit contenu.

6. Procédé selon la revendication 5, **caractérisé en ce qu'**à l'étape iii) on adjoint ledit certificat (CR) par insertion continue dans un endroit choisi dudit contenu.

7. Procédé selon la revendication 5, **caractérisé en ce qu'**à l'étape iii) on adjoint ledit certificat (CR) par superposition continue dans un endroit choisi dudit contenu.

8. Procédé selon l'une des revendications 1 à 4, **caractérisé en ce qu'**à l'étape iii) on adjoint ledit certificat (CR) audit contenu en vue de son affichage dans un endroit choisi d'une zone de contrôle affichée d'une application assurant l'affichage dudit contenu sur un écran dudit équipement de communication (Ei) de l'usager.

9. Procédé selon l'une des revendications 1 à 8, **caractérisé en ce qu'**à l'étape i) on effectue une analyse sémantique de données d'un descriptif de contenu associé audit contenu de manière à extraire des expressions signifiantes, puis on détermine si lesdites expressions signifiantes extraites sont compatibles avec ladite politique personnelle d'utilisation du profil dudit usager et ladite politique générale d'utilisation de profil.

10. Procédé selon l'une des revendications 1 à 9, **caractérisé en ce qu'**il comprend une étape iv) consistant à déterminer pour chaque trace un statut final définissant son exploitabilité à des fins de profilage.

11. Dispositif (D) de contrôle de traces d'accès à des contenus par au moins un usager disposant d'un profil associé à une politique personnelle d'utilisation de profil et d'un équipement de communication (Ei) pouvant se connecter à un réseau de communication (R) dont l'opérateur dispose d'une politique générale d'utilisation de profil et de moyens de gestion (MG1) agencés pour générer et mettre à jour lesdits profils d'usagers à partir de leurs traces d'accès à des contenus, **caractérisé en ce qu'**il comprend i) des moyens d'analyse (MA) agencés, lorsqu'un usager veut accéder à un contenu avec son équipement de communication (Ei) via ledit réseau (R), pour analyser des données décrivant ledit contenu de manière à déterminer si son accès par ledit usager doit être considéré comme une trace compte tenu de sa politique personnelle d'utilisation dudit profil et de ladite politique générale d'utilisation de profil, et ii) moyens de génération (MG2) agencés pour générer un certificat (CR) représentatif du résultat d'une détermination effectuée pour ledit contenu par lesdits moyens d'analyse (MA) et destiné à être adjoint audit contenu en vue de son affichage avec ledit contenu.

12. Dispositif selon la revendication 11, **caractérisé en ce que** lesdits moyens de génération (MG2) sont agencés pour générer un certificat (CR) représentatif d'un résultat signalant à l'usager que l'accès audit contenu soit ne sera pas utilisé en tant que trace pour la mise à jour de son profil, lorsque au moins la politique personnelle d'utilisation du profil de l'usager l'interdit, soit sera utilisé en tant que trace pour la mise à jour de son profil, lorsque la politique personnelle d'utilisation du profil de l'usager et la politique générale d'utilisation de profil l'autorisent conjointement, soit encore sera utilisé sous réserve en tant que trace pour la mise à jour de son profil, lorsque la politique personnelle d'utilisation du profil dudit usager l'autorise mais que ladite politique générale d'utilisation de profil l'interdit.

13. Dispositif selon l'une des revendications 11 et 12, **caractérisé en ce que** lesdits moyens de génération (MG2) sont agencés pour générer un certificat (CR) comprenant une zone de saisie interactive (ZS) propre à permettre audit usager de modifier le résultat d'une détermination effectuée par lesdits moyens d'analyse (MA).

14. Dispositif selon la revendication 13, **caractérisé en ce qu'**il comprend des moyens d'adaptation (MD) agencés pour adapter dynamiquement une politique personnelle d'usager en fonction de saisies effectuées par ledit usager dans ladite zone de saisie interactive (ZS) pour modifier des résultats de déterminations effectuées par lesdits moyens d'analyse (MA).

15. Dispositif selon l'une des revendications 11 à 14, **caractérisé en ce que** lesdits moyens d'analyse (MA) sont agencés pour effectuer une analyse sémantique de données d'un descriptif de contenu associé audit contenu de manière à extraire des expressions signifiantes, puis pour déterminer si lesdites expressions signifiantes extraites sont compatibles avec ladite politique personnelle d'utilisation du profil dudit usager et ladite politique générale d'utilisation de profil.

16. Equipement de communication (Ei) propre à se connecter à un réseau de communication (R) dont l'opérateur dispose d'une politique générale d'utilisation de profil d'usagers et de moyens de gestion (MG1) agencés pour générer et mettre à jour des profils d'usagers à partir de leurs traces d'accès à des contenus, **caractérisé en ce qu'**il comprend un dispositif de contrôle (D) selon l'une des revendications 11 à 15.

17. Equipement de réseau (S) pour un réseau de communication (R) dont l'opérateur dispose d'une politique générale d'utilisation de profil d'usagers et de moyens de gestion (MG1) agencés pour générer et mettre à jour des profils d'usagers à partir de leurs traces d'accès à des contenus, **caractérisé en ce qu'**il comprend un dispositif de contrôle (D) selon l'une des revendications 11 à 15.
